# EUROPEAN PATENT SPECIFICATION

(11) **EP 3 389 924 B1**
(45) Date of publication and mention of the grant of the patent: **21.09.2022**
(21) Application number: 16825890.3
(22) Date of filing: 13.12.2016
(51) Int. Cl.: B23Q 11/08, B23K 37/00

(54) **WORK CELL AND LASER-MACHINING CENTRE EQUIPPED WITH SUCH CELL**
ARBEITSZELLE UND MIT SOLCH EINER ZELLE AUSGESTATTETES LASERBEARBEITUNGSZENTRUM
CELLULE DE TRAVAIL ET CENTRE D'USINAGE AU LASER COMPORTANT UNE TELLE CELLULE

(30) Priority: 15.12.2015 IT UB20159554
(43) Date of publication of application: 24.10.2018
(73) Proprietor: Prima Industrie S.p.A., 10093 Collegno (TO) (IT)
(72) Inventor: FORNASERO, Marco, 10097 Collegno (TO) (IT)
(74) Representative: Frontoni, Stefano
(86) International application number: PCT/IB2016/057570
(87) International publication number: WO 2017/103780

(56) References cited:
- EP-A1- 1 985 412
- DE-A1- 19 929 695

## Description

### Field of the invention

The present invention relates to a work cell and to a laser-machining centre equipped with such cell.

### Prior art

As is known, machining centres equipped with laser heads require an appropriate shielding for protecting, from rays of laser beams directed and/or reflected towards the outside, the areas surrounding the working area in which the staff responsible for control and operation of the centre are operating.

Currently used work cells normally have a structure fixed to the floor, mounted on which are a series of shielding panels designed to define a lateral covering and a top covering of the working area. The lateral covering provides a total cover on four sides, and envisages mobile gates designed to enable access to the working area by the operators or the machinery that serves the work cell.

DE19929695 describes a work cell on which the preamble of appended claim 1 is based.

### Object of the invention

The object of the present invention is to provide a cell that will define two distinct working areas and will be charaterized in that it is constituted by a structure that is simple and easy to install.

In the general framework of industrial machining operations, there is then the constant requirement to be able to use work centres that are as flexible and versatile as possible.

As regards this general problem, in the specific context of machining centres equipped with laser heads, the present applicant again proposes providing a cell that can be converted from a configuration with two working areas to a configuration with just one working area.

### Summary of the invention

One or more of the objects referred to above are achieved by a work cell having the characteristics specified in Claim 1.

The present invention also regards a work centre having the characteristics specified in Claim 12.

The characteristics specified in the claims form an integral part of the teaching provided herein.

The work cell described herein is characterized in that the top covering is mobile selectively between a first position over said first working area, for protecting the underlying first working area and rendering, instead, accessible the second working area to the laser head,and a second position over said second working area, for protecting the underlying second working area and rendering, instead, accessible the first working area to the laser head.

As will be seen in detail in what follows, thanks to the characteristics in question, the work cell described herein can be associated to a single laser head that operates on both of the working areas in an alternating way, at the same time enabling, while the laser head is operating within one area, the other area to be accessible in all safety by an operator, for example so that it can be prepared for machining a new workpiece.

According to a further important characteristic of the work cell described herein, the top mobile covering of the work cell is moreover constituted by a series of panels assembled together in a telescopic way so as to be able to assume selectively an extended configuration, for carrying out the function of covering of the working areas, and a compact configuration, where the covering can instead be withdrawn into a position of non-use. At the same time, the internal divider referred to above can be pre-arranged mobile on wheels so that it can be easily transported into and out of the work cell.

The above characteristics enable conversion of the work cell from a configuration with two working areas to a configuration with a single area, in a simple and fast way.

### Detailed description of some embodiments

Further characteristics and advantages of the present invention will emerge clearly from the ensuing description with reference to the annexed drawings, which are provided purely by way of non-limiting example and in which:
- Figure 1 is a perspective view of an embodiment of the work centre described herein;
- Figure 2 is a perspective view of an embodiment of the work cell described herein, in a configuration with two working areas;
- Figures 3 and 4 are a front view of the work cell of Figure 2, respectively in a first operating condition and in a second operating condition;
- Figure 5 is a side view of the work cell of Figure 2;
- Figure 6 illustrates the work cell of Figure 2 in a configuration with a single working area.

In the ensuing description, various specific details are illustrated aimed at enabling an in-depth understanding of the embodiments.

The references used herein are only provided for convenience and hence do not define the sphere of protection or the scope of invention, which is defined by the appended claims.

As anticipated above, the work cell described herein has been specifically provided for use in work centres in which the laser heads operate.

With reference to the figures, designated by the reference number 100 is a work centre in which a machine is installed, equipped with a laser head 110 for carrying out machining via laser beam, for example operations of welding, cutting, drilling, etc. The laser head 110 is carried by an overhead carriage 120, for example an overhead travelling crane, which is supported by a load-bearing structure 140 - illustrated in the figures in an altogether schematic way - and is mobile in a main direction X of the work centre. The head 110 is mobile with respect to the carriage 120 in the further two main directions Y and Z, which are orthogonal to one another and to the direction X.

As mentioned at the start, in the applications in which a laser head operates, there exists the problem of having to shield the area where the machining head is working so as to protect, from possible reflected rays of the laser beam, the surrounding areas in which the staff responsible for control and/or operation of the work centre may be operating.

In this connection, in a way in itself known in the art, the work centre 100 comprises an outer protective structure having side walls 111 and a roof 113. As will be seen in greater detail in what follows, mobile doors 115 are provided on the front side of the centre to enable access into the centre.

The work cell described herein, which in the figures is designated as a whole by the reference number 10, has the function of defining itself a shielded working area inside the work centre.

The work cell described herein has the peculiarity of defining two distinct working areas in which the head 110 operates alternately, and of providing a shielding such as to enable an operator to access in total safety, during the machining in one of the two areas, the working area set alongside in which the laser head is not operating. In the example illustrated in the figures, the two working areas in question are designated by the reference numbers 20 and 40, respectively.

In various embodiments, as in the one illustrated, the work cell 10 comprises a framework that is constituted by two lateral uprights 12, 14, fixed to the floor, for example via screws or bolts, and by a pair of cross members - of which only the cross member 16 is visible in the figures - oriented in the main direction Y and supported by the uprights 12 and 14. Carried on each upright is a shielding panel 60.

The work cell 10 further comprises an intermediate divider 18, which also bears a shielding panel 60, which is set between the two uprights 12, 14 in a pre-set position, preferably in a position at the same distance from each of them, thus dividing the work cell 10 into the two working areas 20, 40 referred to above.

Furthermore, the work cell 10 comprises a top covering 22, which is mounted mobile on the cross members of the framework in a direction parallel to the main direction X. In particular, the covering 22 is carried, on its side closer to the structure 140, by at least one carriage (not illustrated) that is moved along the corresponding cross member of the framework via a belt transmission system driven by a motor, carried by the cross member itself. Preferably, set between the carriage and the frame of the covering 22 is a guide with washers designed to enable relative movement between the frame and the carriage in the event of impact so as to prevent, in this circumstance, major damage to the structure of the covering. On the opposite side, the covering 22 rests, instead, on bearings, which are mobile on rails provided on the corresponding cross member of the framework.

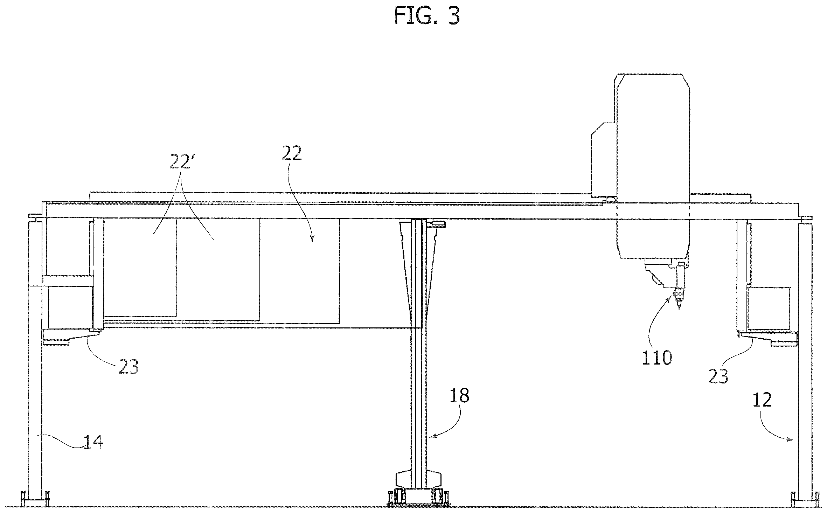

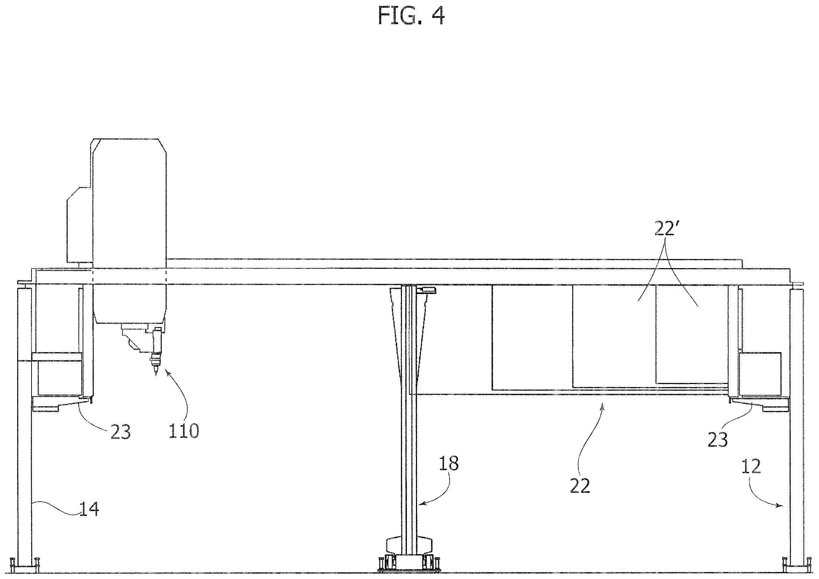

As illustrated in Figures 3 and 4, the covering 22 is rendered mobile with respect to the framework of the work cell so that it can be selectively positioned in two distinct positions, specifically, over the working area 20, in a first position, and over the working area 40, in the second position. In the first position, the covering 22 carries out a function of protection in regard to the underlying working area 20, and renders, instead, accessible to the laser head 110 the working area 40 set alongside. Likewise, in the second position, the covering 22 carries out a function of protection in regard to the working area 40, while it renders the working area 20 accessible to the laser head 110.

As regards the shielding function performed by the structure described, it may be noted that, when the head 110 operates in one of the two working areas, the other area is shielded, from the possible reflections of the laser beam emitted by the head 110, mainly by the intermediate divider 18 and by the top covering 22. As has been said, thanks to these shielding elements the operator can access the shielded area in total safety. On the other hand, the panels 60 arranged on the lateral uprights 12, 14 perform, instead, a shielding function to protect the areas outside the work cell. The variation of position of the covering 22 must clearly be co-ordinated with control of the laser head 110 so that the latter will not come to interfere with the movement of translation of the covering. In this connection, before the covering 22 is moved, the head 110 must be brought back out of the work cell 10 via a movement along the axes Y and Z, to be set in a condition of non-interference.

In regard to this technical problem, it should be noted that in various preferred embodiments, as in the one illustrated, the covering 22 advantageously has a transverse profile, which in the proximity of the structure 140 identifies a sudden lowering, set before the end edge of the covering itself, so as to define on the outside a recess 50 within which the laser head 110 can be received during movement of the covering. This enables the work cell 10 to be brought immediately adjacent to the load-bearing structure 140 of the laser head, thus reducing the overall dimensions of the work centre and, at the same time, optimizing the space available for the two areas 20, 40.

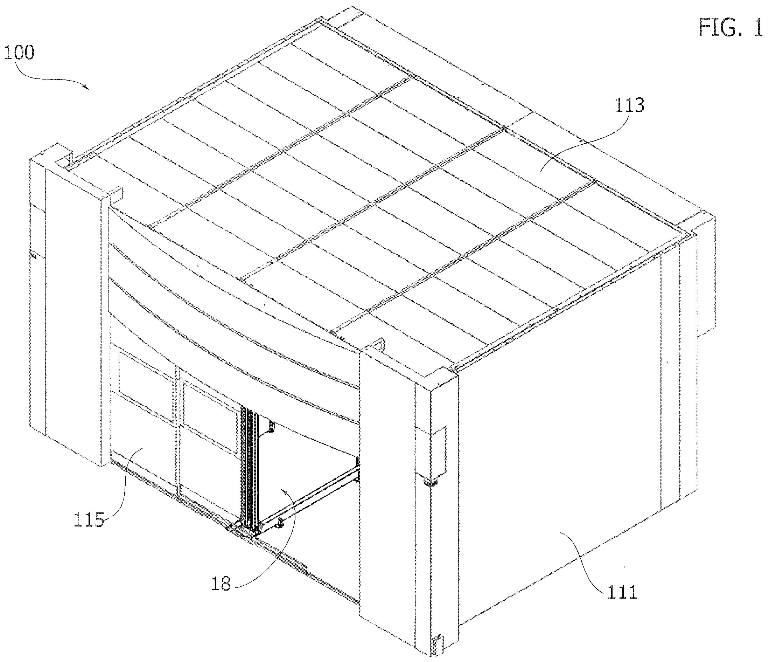

As mentioned previously, the work centre 100 has at the front a passage for access that is closed by mobile doors 115 having, like the walls 111, a function of protection towards the external environment. It should now be noted that the doors 115 are two in number (in Figure 1 only the left-hand one is visible that is in a closed position) and close the two passages to the working areas 20 and 40; preferably, these doors are slidable and are set on the opposite sides of the work centre in their respective open position. Each of these doors is designed to remain closed during machining within the respective working area for carrying out a shielding action to protect the external environment, and is instead designed to move into the open position during machining in the adjacent working area to allow free access for the operator. The positioning of these doors is hence synchronised with movement of the head 110 exactly as in the case of the covering 22. It is to be noted that the doors 115 can also form part of the structure of the work cell 10 and hence be constrained to the load-bearing structure of said work cell, instead of being constrained to the structure, outside the work cell, of the work centre. It should moreover be noted that, when these doors are both in the closed position, they close completely the passage for access to the work centre 100, even in the absence of the intermediate divider, and are hence also able to operate in the same way as a sliding door of a conventional work centre.

From what has been said above, it hence clearly emerges how the work cell described herein makes it possible to set up the work centre 100 for operation with two distinct working areas via a simple structure perfectly integrated in the work centre. This configuration with two areas, as has been seen, enables the laser head to operate in the two working areas in an alternating way and moreover with elimination of any dead time for preparation and/or loading thanks to the fact that, while the head is carrying out a machining operation inside one area, the operator can access the area alongside in conditions of total safety.

Clearly, a control unit, preferably the control unit of the work centre itself, will be pre-arranged for controlling the covering 22 and the doors 115. Control of the covering and of the doors will necessarily be co-ordinated with control of the laser head 110 - or vice versa - for the reasons outlined above. In preferred embodiments, the work centre can provide in each working area a control station, via which the operator can start up, through one and the same command, machining within the working area and the synchronised movements seen above of the covering 22 and of the doors 115. In alternative embodiments, a single control station for both of the working areas is instead envisaged.

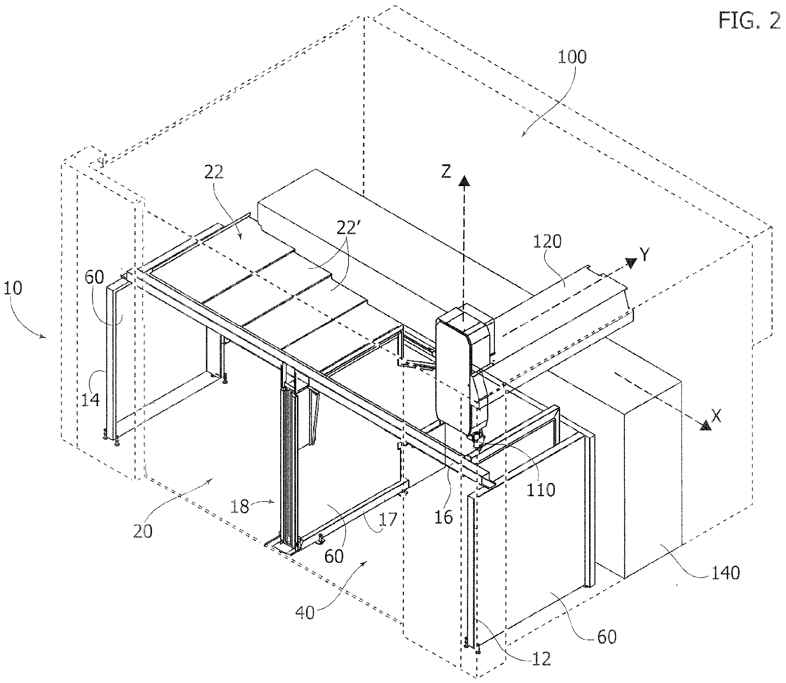

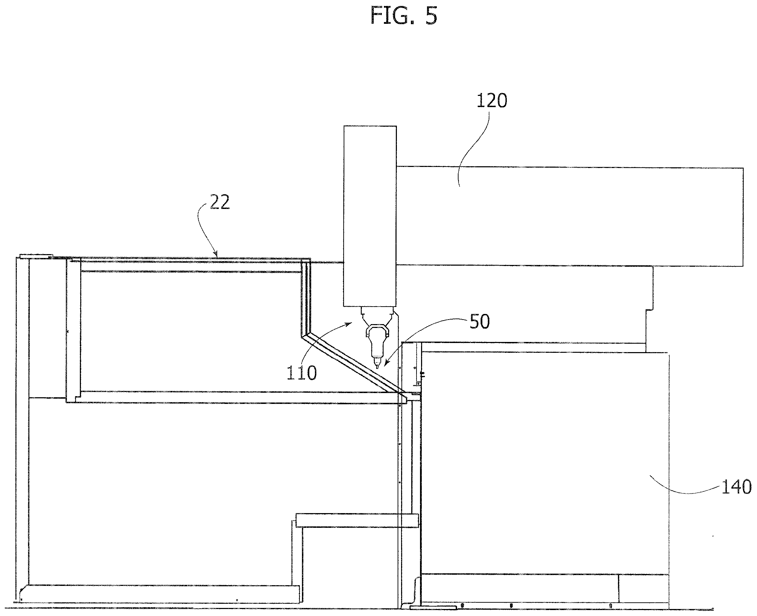

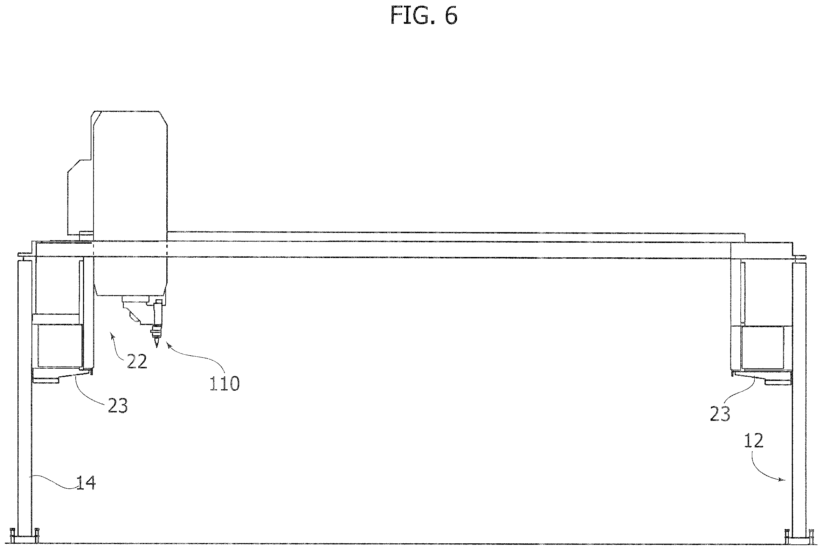

Now, as regards the possibility of conversion of the work cell 10 from the configuration with two working areas to a configuration with a single working area, the covering 22 may, for this purpose, be constituted by a series of panels 22 assembled together in a telescopic way so as to be able to assume selectively the extended configuration illustrated in Figures 1, 2, and 3, for the covering function discussed above, and a compact configuration, illustrated in Figure 5, with which the covering can instead be withdrawn into a position of non-use within the work cell. As may be seen in Figure 6, this position of non-use is preferably provided close up to one of the two lateral uprights of the work cell. Furthermore, in various preferred embodiments, as in the one illustrated, the divider 18 is mounted on a trolley so that it can be easily transported into and out of the work cell 10; it is positioned inside the work cell 10, in the pre-set position, via reference guides 17 fixed to the floor inside the work cell.

Thanks to the characteristics referred to, the work cell 10 can hence be converted from its configuration with two working areas illustrated in Figure 1 into the configuration with a single working area illustrated in Figure 5, in an extremely simple and fast way, simply by setting the covering 22 in the position of non-use discussed above, and removing the intermediate divider 18 from the work cell, this being an operation that can be carried out also by just one operator since the divider is mobile on wheels. From the foregoing, in this operating mode, the doors 115 can operate for closing the passage for access to the work centre completely.

It is also to be noted that in various embodiments, as in the one illustrated, in each of the two working areas the work cell can present a fixed panel 23 set at the margin of the corresponding area, on the side further away from the other working area, which has the function of constituting a prolongation of the covering 22 when this is in the corresponding position over the working area itself. This fixed panel co-operates with the covering to protect the corresponding area from above, and hence enables provision of a covering that in itself has dimensions smaller than in the case where the covering has to cover by itself the entire area, with evident advantages both from the constructional standpoint and from the functional standpoint, in particular as regards the condition of non-use of the covering itself, where this may in fact present even smaller overall dimensions.

The fixed panel 23 can be mounted on the corresponding lateral upright or else on the cross members of the framework of the work cell. As may be seen in Figure 5, in its position of non-use the covering 22 is set above the aforesaid panel.

In order to guarantee proper operation of the work cell, and more in general of the work centre, the work cell 10 can be equipped with position sensors designed to detect proper positioning of the intermediate divider 18 and of the covering 22 in their respective operating positions for the shielding function referred to above. In this case, the control unit of the centre is configured for activating operation of the laser head only if it receives, from the aforesaid sensors, confirmation of proper positioning of the elements controlled thereby.

Furthermore, the intermediate divider 18 can be equipped with a top hinged portion, designed to collapse in the event of impact, for example in the case where the head 110 comes to bang against the divider, and a sensor may be associated to this portion to verify the position thereof. At the same time, the control unit is connected to the sensor in question for interrupting the operations of the laser head in the case where tipping-over of this portion of the divider is detected.

The sensors in question may, for example, be constituted by proximity sensors of a magnetic type.

Of course, without prejudice to the principle of the invention, the details of construction and the embodiments may vary, even significantly, with respect to what has been illustrated herein purely by way of non-limiting example, without thereby departing from the scope of the invention, as defined in the annexed claims. It should be noted, in particular, that the lateral covering of the work cell 10 does not necessarily have to be provided via accessory structures that need to be added to the work centre but may also be defined, either totally or in part, by structures already forming part of the work centre.

## Claims

1. A work cell for machining operations carried out via a laser head, comprising:
- at least one working area (20, 40) designed to receive the pieces on which to carry out laser machining; and
- a lateral covering (60) and a top covering (22) configured for separating at least partially said working area (20, 40) from the outside,
wherein:
- said work cell comprises an internal divider (18) that defines, together with said lateral covering, a first working area (20) and a second working area (40) separated from one another by said divider;
**characterised in that** said top covering (22) is mobile selectively between a first position over said first working area (20), for protecting the underlying first working area (20) and rendering, instead, accessible the second working area (40) to the laser head (110),and a second position over said second working area (40), for protecting the underlying second working area (40) and rendering, instead, accessible the first working area (20) to the laser head (110)

2. The work cell according to Claim 1, wherein said top covering (22) is controlled by an actuator in its movement between said first and second positions.

3. The work cell according to Claim 1 or Claim 2, wherein said top covering (22) is constituted by a series of panels (22') assembled together in a telescopic way so as to be able to assume selectively an extended configuration, for covering said first and second areas (20, 40), and a compact configuration for withdrawing said covering into a position of non-use.

4. The work cell according to any one of the preceding claims, wherein said top covering (22) is operated via a belt transmission system driven by an electric motor.

5. The work cell according to any one of the preceding claims, wherein said internal divider (18) is mounted on a trolley.

6. The work cell according to Claim 5, comprising, fixed to the floor, a reference guide (17) for the trolley of said divider, designed to define a proper positioning of the divider within said work cell.

7. The work cell according to any one of the preceding claims, wherein said top covering (22) has a transverse profile that identifies, on one side, a lowering that is set before the corresponding end edge of the covering, so as to define on the outside a recess (50), above said covering, where said laser head (110) can be received during movement of said top covering.

8. The work cell according to any one of the preceding claims, comprising sensors for detection of proper positioning of said top covering in said first and second positions, which are designed to transmit a signal indicating said positioning to a control unit.

9. The work cell according to any one of the preceding claims, comprising a sensor for detection of proper positioning of said divider within said work cell, which is designed to transmit a signal indicating said positioning to a control unit.

10. The work cell according to any one of the preceding claims, wherein said divider comprises a part that can be tipped over in the event of impact, said work cell comprising a sensor for detecting tipping-over of said part, which is designed to transmit a signal indicating said tipping-over to a control unit.

11. The work cell according to any one of the preceding claims, comprising two sliding doors (115) that close the respective passages, through said lateral covering, to said first and second working areas (20, 40).

12. A work centre, of the type including:
- a machine tool comprising a laser head (110); and
- a work cell (10) according to any one of the preceding claims,
wherein said laser head is itself mobile between a first position in said first working area (20) and a second position in said second working area (40);
wherein said work centre further comprises:
- a control unit configured for controlling the top covering (22) of said work cell and said laser head (110) in such a way that, when said laser head is in its first position, said covering is in its second position and, when said laser head is in its second position, said top covering is in its first position.

13. The work centre according to Claim 12, wherein:
said work cell comprises sensors for detecting proper positioning of said top covering in said first and second positions; and/or
said work cell comprises a sensor for detecting proper positioning of said divider within said work cell,
wherein said control unit is configured for preventing or blocking movement and/or operation of said laser head if one of said sensors does not detect said proper positioning.

14. The work centre according to Claim 12 or Claim 13, comprising outer side walls (111), a roof (113), and at least one mobile door (115), which define a closed space enclosed in which are said machine tool and said work cell.

15. The work centre according to Claim 14, comprising two sliding doors (115) that close the respective passages to said first and second working areas (20, 40),
wherein said control unit is configured for controlling said doors in such a way that, when said laser head is in its first position, the door of said first working area is in its closed position, whereas the door of said second working area is in its open position, and, when said laser head is in its second position, the door of said first working area is in its open position, whereas the door of said second working area is in its closed position.

## Patentansprüche

1. Arbeitszelle für Bearbeitungsvorgänge, die über einen Laserkopf ausgeführt werden, die Folgendes umfasst:
- mindestens eine Arbeitsfläche (20, 40), die dazu konzipiert ist, mindestens die Werkstücke, an welchen Laserbearbeitung ausgeführt werden soll, zu empfangen; und
- eine Seitenabdeckung (60) und eine Oberseitenabdeckung (22), die dazu konfiguriert sind, die Arbeitsfläche (20, 40) mindestens teilweise von der Außenseite zu trennen,
wobei:
- die Arbeitszelle einen inneren Trenner (18) umfasst, der gemeinsam mit der Seitenabdeckung eine erste Arbeitsfläche (20) und eine zweite Arbeitsfläche (40), die voneinander durch den Teiler getrennt sind, definiert,
**dadurch gekennzeichnet, dass** die obere Abdeckung (22) selektiv zwischen einer ersten Position über der ersten Arbeitsfläche (20) zum Schützen der darunterliegenden ersten Arbeitsfläche (20) und stattdessen Zugänglichmachen der zweiten Arbeitsfläche (40) für den Laserkopf (110), und einer zweiten Position über der zweiten Arbeitsfläche (40) zum Schützen der darunterliegenden zweiten Arbeitsfläche (40) und stattdessen Zugänglichmachen der ersten Arbeitsfläche (20) für den Laserkopf (110) beweglich ist.

2. Arbeitszelle nach Anspruch 1, wobei die obere Abdeckung (22) von einem Aktuator in ihrer Bewegung zwischen der ersten und der zweiten Position gesteuert ist.

3. Arbeitszelle nach Anspruch 1 oder Anspruch 2, wobei die obere Abdeckung (22) aus einer Reihe von Paneelen (22') besteht, die miteinander auf eine teleskopische Weise derart zusammengefügt sind, dass sie fähig sind, selektiv eine ausgestreckte Konfiguration zum Abdecken der ersten und zweiten Fläche (20, 40) einzunehmen, und eine kompakte Konfiguration zum Zurückziehen der Abdeckung in eine Nichtverwendungsposition.

4. Arbeitszelle nach einem der vorstehenden Ansprüche, wobei die obere Abdeckung (22) über ein Riemenübertragungssystem, das von einem Elektromotor angetrieben wird, betätigt wird.

5. Arbeitszelle nach einem der vorstehenden Ansprüche, wobei der innere Teiler (18) auf einen Wagen montiert ist.

6. Arbeitszelle nach Anspruch 5, die, an dem Boden befestigt, eine Referenzführung (17) für den Wagen des Teilers umfasst, die dazu konzipiert ist, eine ordnungsgemäße Positionierung des Teilers innerhalb der Arbeitszelle zu definieren.

7. Arbeitszelle nach einem der vorstehenden Ansprüche, wobei die obere Abdeckung (22) ein Querprofil aufweist, das auf einer Seite eine Senkung identifiziert, die vor der entsprechenden Endkante der Abdeckung dazu eingestellt ist, auf der Außenseite eine Vertiefung (50) über der Abdeckung zu definieren, wo der Laserkopf (110) während Bewegung der oberen Abdeckung aufgenommen werden kann.

8. Arbeitszelle nach einem der vorstehenden Ansprüche, die Sensoren zur Erfassung ordnungsgemäßer Positionierung der oberen Abdeckung in einer ersten und einer zweiten Position umfasst, die dazu konzipiert sind, ein Signal zu übertragen, das die Positionierung zu einer Steuereinheit angibt.

9. Arbeitszelle nach einem der vorstehenden Ansprüche, die einen Sensor zur Erfassung der ordnungsgemäßen Positionierung des Teilers innerhalb der Arbeitszelle umfasst, der dazu konzipiert ist, ein Signal zu übertragen, das die Positionierung zu einer Steuereinheit angibt.

10. Arbeitszelle nach einem der vorstehenden Ansprüche, wobei der Teiler ein Teil umfasst, das bei einem Aufprall umgekippt werden kann, wobei die Arbeitszelle einen Sensor zum Erfassen von Umkippen des Teils umfasst, der dazu konzipiert ist, ein Signal zu übertragen, das das Umkippen zu einer Steuereinheit angibt.

11. Arbeitszelle nach einem der vorstehenden Ansprüche, die zwei Schiebetüren (115) umfasst, die die jeweiligen Passagen durch die Seitenabdeckung zu der ersten und der zweiten Arbeitsfläche (20, 40) schließen.

12. Bearbeitungszentrum von dem Typ, der Folgendes beinhaltet:
- eine Werkzeugmaschine, die einen Laserkopf (110) umfasst; und
- eine Arbeitszelle (10) nach einem der vorstehenden Ansprüche,
wobei der Laserkopf selbst zwischen einer ersten Position in der ersten Arbeitsfläche (20) und einer zweiten Position in der zweiten Arbeitsfläche (40) beweglich ist;
wobei das Bearbeitungszentrum weiter Folgendes umfasst:
- eine Steuereinheit, die dazu konfiguriert ist, die obere Abdeckung (22) der Arbeitszelle und den Laserkopf (110) derart zu steuern, dass, wenn der Laserkopf in seiner ersten Position ist, die Abdeckung in ihrer zweiten Position ist, und, wenn der Laserkopf in seiner zweiten Position ist, die obere Abdeckung in ihrer ersten Position ist.

13. Bearbeitungszentrum nach Anspruch 12, wobei:
die Arbeitszelle Sensoren zum Erfassen ordnungsgemäßer Positionierung der oberen Abdeckung in der ersten und der zweiten Position umfasst; und/oder
die Arbeitszelle einen Sensor zum Erfassen ordnungsgemäßer Positionierung des Teilers innerhalb der der Arbeitszelle umfasst,
wobei die Steuereinheit dazu konfiguriert ist, Bewegung und/oder Betrieb des Laserkopfes zu verhindern oder zu blockieren, falls einer der Sensoren nicht die ordnungsgemäße Positionierung erfasst.

14. Bearbeitungszentrum nach Anspruch 12 oder Anspruch 13, das Außenseitenwände (111), ein Dach (113) und mindestens eine bewegliche Tür (115) umfasst, die einen geschlossenen Raum definieren, in dem die Werkzeugmaschine und die Arbeitszelle eingeschlossen sind.

15. Bearbeitungszentrum nach Anspruch 14, das zwei Schiebetüren (115) umfasst, die die jeweiligen Passagen zu der ersten und der zweiten Arbeitsfläche (20, 40) schließen,
wobei die Steuereinheit dazu konfiguriert ist, die Türen derart zu steuern, dass, wenn der Laserkopf in seiner ersten Position ist, die Tür der ersten Arbeitsfläche in ihrer geschlossenen Position ist, während die Tür der zweiten Arbeitsfläche in ihrer offenen Position ist, und, wenn der Laserkopf in seiner zweiten Position ist, die Tür der ersten Arbeitsfläche in ihrer offenen Position ist, während die Tür der zweiten Arbeitsfläche in ihrer geschlossenen Position ist.

## Revendications

1. Cellule de travail pour des opérations d'usinage réalisées par une tête laser, comprenant :
- au moins une zone de travail (20, 40) conçue pour recevoir les pièces sur lesquelles réaliser l'usinage au laser ; et
- une couverture latérale (60) et une couverture supérieure (22) configurées pour séparer au moins partiellement ladite zone de travail (20, 40) de l'extérieur,
dans laquelle :
- ladite cellule de travail comprend un séparateur interne (18) qui définit, conjointement avec ladite couverture latérale, une première zone de travail (20) et une seconde zone de travail (40) séparées l'une de l'autre par ledit séparateur ;
**caractérisée en ce que** :
ladite couverture supérieure (22) est sélectivement mobile entre une première position sur ladite première zone de travail (20) pour protéger la première zone de travail (20) sous-jacente et rendre plutôt accessible ladite seconde zone de travail (40) à la tête laser (110), et une seconde position sur ladite seconde zone de travail (40) pour protéger la seconde zone de travail (40) sous-jacente et rendre plutôt accessible la première zone de travail (20) à la tête laser (110).

2. Cellule de travail selon la revendication 1, dans laquelle ladite couverture supérieure (22) est commandée par un actionneur dans son mouvement entre lesdites première et seconde positions.

3. Cellule de travail selon la revendication 1 ou la revendication 2, dans laquelle ladite couverture supérieure (22) est constituée par une série de panneaux (22') assemblés d'une manière télescopique afin de pouvoir adopter sélectivement une configuration étendue, pour recouvrir lesdites première et seconde zones (20, 40), et une configuration compacte pour retirer ladite couverture dans une position de non utilisation.

4. Cellule de travail selon l'une quelconque des revendications précédentes, dans laquelle ladite couverture supérieure (22) est actionnée via un système de transmission à courroie entraîné par un moteur électrique.

5. Cellule de travail selon l'une quelconque des revendications précédentes, dans laquelle ledit séparateur interne (18) est monté sur un chariot.

6. Cellule de travail selon la revendication 5, comprenant, fixé sur le sol, un guide de référence (17) pour le chariot dudit séparateur, conçu pour définir un positionnement correct du séparateur dans ladite cellule de travail.

7. Cellule de travail selon l'une quelconque des revendications précédentes, dans laquelle ladite couverture supérieure (22) a un profil transversal qui identifie, d'un côté, un abaissement qui est réglé avant le bord d'extrémité correspondant de la couverture, afin de définir, à l'extérieur, un évidement (50), au-dessus de ladite couverture, dans lequel ladite tête laser (110) peut être reçue pendant le déplacement de ladite couverture supérieure.

8. Cellule de travail selon l'une quelconque des revendications précédentes, comprenant des capteurs pour détecter le bon positionnement de ladite couverture supérieure dans lesdites première et seconde positions, qui sont conçus pour transmettre un signal indiquant ledit positionnement à une unité de commande.

9. Cellule de travail selon l'une quelconque des revendications précédentes, comprenant un capteur pour la détection du bon positionnement dudit séparateur dans ladite cellule de travail, qui est conçu pour transmettre un signal indiquant ledit positionnement à une unité de commande.

10. Cellule de travail selon l'une quelconque des revendications précédentes, dans laquelle ledit séparateur comprend une partie qui peut être renversée en cas de choc, ladite cellule de travail comprenant un capteur pour détecter le renversement de ladite partie, qui est conçu pour transmettre un signal indiquant ledit renversement à une unité de commande.

11. Cellule de travail selon l'une quelconque des revendications précédentes, comprenant deux portes coulissantes (115) qui ferment les passages respectifs, par le biais de ladite couverture latérale, auxdites première et seconde zones de travail (20, 40).

12. Centre d'usinage du type comprenant :
- une machine-outil comprenant une tête laser (110) ; et
- une cellule de travail (10) selon l'une quelconque des revendications précédentes,
dans lequel ladite tête laser est elle-même mobile entre une première position dans ladite première zone de travail (20) et une seconde position dans ladite seconde zone de travail (40) ;
dans lequel ledit centre d'usinage comprend en outre :
- une unité de commande configurée pour commander la couverture supérieure (22) de ladite cellule de travail et ladite tête laser (110) de sorte que, lorsque ladite tête laser est dans sa première position, ladite couverture est dans sa seconde position et, lorsque ladite tête laser est dans sa seconde position, ladite couverture supérieure est dans sa première position.

13. Centre d'usinage selon la revendication 12, dans lequel :
ladite cellule de travail comprend des capteurs pour détecter le bon positionnement de ladite couverture supérieure dans lesdites première et seconde positions ; et/ou
ladite cellule de travail comprend un capteur pour détecter le bon positionnement dudit séparateur dans ladite cellule de travail,
dans lequel ladite unité de commande est configurée pour empêcher ou bloquer le déplacement et/ou le fonctionnement de ladite tête laser si l'un desdits capteurs ne détecte pas ledit bon positionnement.

14. Centre d'usinage selon la revendication 12 ou la revendication 13, comprenant des parois latérales externes (111), un toit (113) et au moins une porte mobile (115) qui définissent un espace clos enfermé, dans lequel se trouvent ladite machine-outil et ladite cellule de travail.

15. Centre d'usinage selon la revendication 14, comprenant deux portes coulissantes (115) qui ferment les passages respectifs auxdites première et seconde zones de travail (20, 40),
dans lequel ladite unité de commande est configurée pour commander lesdites portes de sorte que, lorsque ladite tête laser est dans sa première position, la porte de ladite première zone de travail est dans sa position fermée, alors que la porte de ladite seconde zone de travail est dans sa position ouverte, et lorsque ladite tête laser est dans sa seconde position, la porte de ladite première zone de travail est dans sa position ouverte, alors que la porte de ladite seconde zone de travail est dans sa position fermée.
